# EUROPÄISCHE PATENTSCHRIFT

(11) **EP 0 574 408 B1**
(45) Veröffentlichungstag und Bekanntmachung des Hinweises auf die Patenterteilung: **03.04.1996**
(21) Anmeldenummer: 92902382.8
(22) Anmeldetag: 10.01.1992
(51) Int. Cl.: F16K 31/06, H01F 7/18

(54) **VERFAHREN ZUR ANSTEUERUNG EINES ALS MAGNETVENTIL AUSGEBILDETEN SCHIEBERVENTILS SOWIE FÜR EINE ANWENDUNG DES VERFAHRENS GEEIGNETES MAGNETVENTIL**
PROCESS FOR ACTUATING A SLIDE VALVE DESIGNED AS A MAGNETIC VALVE, MAGNETIC VALVE FOR CARRYING OUT SAID PROCESS
PROCEDE DE COMMANDE D'UNE VANNE A TIROIR CONCUE COMME UNE VANNE MAGNETIQUE ET VANNE MAGNETIQUE PERMETTANT DE METTRE EN OEUVRE LE PROCEDE

(30) Priorität: 08.03.1991 DE 4107496
(43) Veröffentlichungstag der Anmeldung: 22.12.1993
(73) Patentinhaber: SCHULZE, Eckehart, D-71287 Weissach (DE)
(72) Erfinder: SCHULZE, Eckehart, D-71287 Weissach (DE)
(74) Vertreter: Lutz, Johannes Dieter, Dr.
(86) Internationale Anmeldenummer: EP9200035
(87) Internationale Veröffentlichungsnummer: WO9215812

(56) Entgegenhaltungen:
- AT-B- 231 773
- DE-A- 3 320 110
- DE-A- 3 530 966
- DE-A- 3 814 156
- O+P LHYDRAULIK UND PNEU- MATIK, Jahrgang 22, Heft 11, November 1978, KRAUSSKOPF- -VERLAG, 65 Mainz, MANSFELD UND TERSTEEGEN "Elektrohydraulischer Posi- tionierantrieb mit schnell- schaltenden Magnetventilen und pulsmodulierter Ansteuerung" siehe Seiten 451-457.
- O+P LHYDRAULIK UND PNEU- MATIK, Jahrgang 16, Heft 11, November 1972, KRAUSSKOPF- -VERLAG, 65 Mainz, HESSE UND M LLER "Pulsdauer- modulierte Steuerung von Magnetventilen " siehe Seiten 451-457.

## Beschreibung

Die Erfindung betrifft ein bekanntes Verfahren zur Einstellung definierter Durchflußquerschnitte in alternativen Funktionsstellungen eines als Magnetventil ausgebildeten Schieberventils, dessen Steuermagnetsystem zwei Erregerwicklungen umfaßt, durch deren alternative oder mit unterschiedlichen Steuerströmen erfolgende Bestromung ein zur Verschiebung eines Ventilkörpers vorgesehener Anker eine zu der allein oder stärker bestromten Erregerwicklung hin gerichtete Verschiebung erfährt, wobei dieser Anker eine federzentrierte Grundstellung hat, die entweder einem definierten Öffnungszustand des Ventils in einer seiner beiden alternativen Funktionsstellungen oder einer Zwischenstellung entspricht, z.B. einer dritten, dem nicht erregten Zustand des Magnetsystems zugeordneten Funktionsstellung, wobei zur Erregung der beiden Magnetwicklungen ausgenutzte Erregerströme einer Impulsmodulation unterworfen sind, durch die der Anker und mit diesem der bewegliche Ventilkörper ständig eine Hin- und Herbewegung ausführen.

Die GB-A-885 121 zeigt ein Verfahren gemäß Oberbegriff des Anspruchs 1, wobei allerdings die Zentrierung des Ankers durch elektromagnetische Kräfte bewirkt wird.

Hierdurch soll in bekannter Weise die zwischen dem beweglichen Ventilkörper und dem gehäusefesten Ventilelement des Ventils vorhandene Reibung, sobald das Ventil betätigt werden muß, auf dem relativ niedrigen Wert der Gleitreibung gehalten werden, um insoweit ein sicheres Ansprechen des Ventils zu erreichen und insbesondere bei kleinen, nur einen Bruchteil des maximalen Aussteuerhubes entsprechenden Hüben das Auftreten von Stick-Slip-Effekten zu vermeiden. Auch die Zeitspannen, innerhalb derer bestimmte Funktionsstellungen bzw. Öffnungsquerschnitte von Strömungspfaden des Ventils erreicht werden, sollen hierdurch möglichst kurz gehalten werden.

Hierbei wird jeweils eine Erregerwicklung bestromt, die einer der Funktionsstellungen des Magnetventils zugeordnet ist, und es wird ihrem Erregerstrom eine Welligkeit aufgeprägt, die zu einer pulsierenden Zu- und Abnahme der magnetischen Kräfte führt, die den Anker gegen die Wirkung einer Rückstellfeder in seine Soll-Position "ziehen". Diese Soll-Position, die einem erwünschten Durchflußquerschnitt des Ventils in dieser Funktionsstellung entsprechen soll, muß sich hierbei aus dem Gleichgewicht der durch die Erregung der Wicklung erzeugten magnetischen Stellkraft und der mit zunehmender Auslenkung des Ankers zunehmenden Rückstellkraft der jeweils wirksamen Ventilfeder ergeben. Um mit in solcher Weise angesteuerten Magnetventilen einigermaßen kurze Schaltzeiten zu erreichen, müssen kräftige Rückstellfedern verwendet werden und hohe Erregerströme zur Bestromung der Erregerwicklungen erzeugt werden, kräftige Rückstellfedern deshalb, um bei einer Abschaltung der Erregung eine rasche Rückkehr des Ankers in seine Grundstellung zu ermöglichen und dementsprechend hohe Erregerströme, um den Anker gegen die Wirkung der kräftigen Rückstellfedern hinreichend schnell verschieben zu können. Um die Schaltvorgänge zu beschleunigen, könnte auch daran gedacht werden, bei einem Abschalten der Erregung der einen Erregerwicklung kurzzeitig die in entgegengesetzter Richtung magnetische Kräfte entfaltende Wicklung zu erregen, was aber mit erheblichem steuerungstechnischen Aufwand verknüpft wäre und/oder erheblichen Aufwand für zusätzliche Steuerwicklungen erfordern würde (GB-PS 885,121).

Mit den insoweit erläuterten, betriebstechnischen Nachteilen behaftet wäre auch ein aus der AT 231 773 B1 bekanntes Magnetventil mit Doppelhub-Magnetsystem gemäß Oberbegriff des Anspruchs 7, bei dem, im Unterschied zu dem Magnetventil gemäß der GB-PS 885 121 bekannten Magnetventil, das kolbenförmige Ventilelement gehäusefest angeordnet und das bewegliche Ventilelement als das kolbenfeste Ventilelement umschließendes, hülsenförmiges Teil ausgebildet ist, das den Anker des Doppelhub-Magnetsystems bildet, das, je nach Bestromung der einen oder der anderen Erregerwicklung in Anlage mit einem aus magnetisierbarem Material bestehenden, einen Polschuh bildenden Gehäuseabschlußteil gezogen wird, derart, daß die maximale Auslenkung des beweglichen Ventilelements entsprechenden Endstellungen desselben durch Anlage dieses beweglichen Ventilelements an den Gehäuseabschlußteilen markiert sind.

Aufgabe der Erfindung ist es daher, ein Verfahren der eingangs genannten Art dahingehend zu verbessern, das ein rascheres Ansprechverhalten eines Doppelhub-Magnetventils ermöglicht und die Erzielung der erforderlichen mechanischen Auslenkungen des Ankers und des mit diesem bewegungsgekoppelten Ventilkörpers mit vergleichsweise geringen von dem Steuermagnetsystem zu entfaltenden magnetischen Kräften auskommt, sowie ein zur Anwendung des erfindungsgemäßen Verfahrens besonders geeignetes Magnetventil anzugeben.

Diese Aufgabe wird erfindungsgemäß hinsichtlich des Verfahrens dem Grundgedanken nach durch die Merkmale des Patentanspruchs 1 sowie in weiteren Ausgestaltungen dieses Verfahrens durch die Merkmale der Ansprüche 2 bis 6 und hinsichtlich des Magnetventils dem Grundgedanken nach durch die Merkmale des Anspruchs 7 sowie in weiteren Ausgestaltungen dieses Ventils durch die Merkmale der Ansprüche 8 bis 12 gelöst.

Hiernach werden bei einer Ansteuerung des Magnetventils stets beide Erregerwicklungen in schneller, vorzugsweise, wie gemäß Anspruch 2 vorgesehen, periodischer Folge bestromt, wobei durch das Verhältnis der - unterschiedlichen - Zeitspannen T₁ und T₂, für die die eine und die andere Erregerwicklung mit Erregerstrom - pulsierendem Gleichstrom - beaufschlagt werden, sowohl die "Auswahl" der Schaltstellung als auch der Auslenkungshub des Ankers und des beweglichen Ventilelements des Magnetventils bestimmt werden. Durch eine hinreichend hohe Modulationsfrequenz fₘ mit der die Erregerwicklungen alternierend mit derselben Stromstärke jedoch für unterschiedliche Zeitspannen T₁ und T₂ innerhalb der Periodendauer der Stromimpulse angesteuert werden, wird unter Ausnutzung der mechanischen Trägheit des Ankers erreicht, daß die im Takt der Modulationsfrequenz erfolgenden Hin- und Herbewegungen des Ankers des Magnetventils, durch die dieser, auch wenn er seine Gleichgewichtslage als mittlere Position erreicht hat, ständig in Bewegung bleibt, Amplituden haben, die klein sind gegenüber den Auslenkungen des Ankers aus seiner federzentrierten Mittelstellung.

Da ein überwiegender Teil der Rückstellkräfte, welche "innerhalb" der jeweiligen Funktionsstellung des Magnetventils die Position seines beweglichen Ventilelements und damit die Durchflußquerschnitte bzw. Strömungs-Widerstände seiner Strömungspfade bestimmen, durch das Steuermagnetsystem selbst erzeugt werden, können zur Federzentrierung des Ankers relativ schwach dimensionierte Rückstellfedern benutzt werden, mit der vorteilhaften Folge, daß zur Erregung des Magnetsystems und zur Erzielung eines bestimmten Auslenkungshubes des Ankers auch entsprechend schwächere Erregerströme ausgenutzt werden können, bzw. mit einer vorgegebenen Erregerstromstärke ein sensibleres - schnelleres - Ansprechverhalten eines nach dem erfindungsgemäßen Verfahren angesteuerten Magnetventils erzielt wird.

Wenn, wie gemäß Anspruch 3 vorgesehen, das Verhältnis T₁/T₂ der Zeitspannen T₁ und T₂, für die innerhalb einer Periodendauer T der Erregerstrom-Modulation der beiden Erregerwicklungen zwischen 1/100 und 100/1 veränderbar ist, wobei diese Veränderung dahingehend erfolgt, daß diese Zeitspannen um gleiche inkrementale Zeitintervalle verlängert und verkürzt werden, so ergibt sich in sehr guter Näherung ein linearer Zusammenhang zwischen Änderungen der Erregungszeitspannen T₁ und T₂ und den mit diesen korrelierten Auslenkungen des Ankers aus seiner Ruhelage bzw. einer zuvor eingenommenen Position, und es können - durch Wahl hinreichend kleiner Änderungsschritte dieser Zeitspannen - die Auslenkungen des Ankers entsprechend fein abgestuft werden, wobei durch die Ausnutzung eines inkrementalen Änderungsbetrages für eine gegenläufige Änderung der Erregungszeitspannen T₁ und T₂ eine gleichsam "digitale" Abstufung der Auslenkungen des Ankers bzw. des beweglichen Ventilkörpers eines Magnetventils erzielbar ist. Inkrementale Änderungen dieser Erregungszeitspannen T₁ und T₂ von 1/100 der Periodendauer T sind mit gängigen Mitteln der elektronischen Schaltungstechnik ohne weiteres realisierbar, was für den praktischen Betrieb die Möglichkeit einer ausreichend stetigen Veränderbarkeit des Auslenkungshubes des Ankers eines solchermaßen gesteuerten Magnetventils impliziert.

Um Begrenzungen der Schalt- bzw. Einstellzeiten des Ankers und des beweglichen Ventilkörpers des Magnetventils zu kleineren Werten hin weitestmöglich zu vermeiden, ist es vorteilhaft, mit möglichst hohen Werten der Modulationsfrequenz fₘ zu arbeiten, wobei mit einer Modulationsfrequenz von 100 Hz Schaltzeiten um 10 ms ohne weiteres erreichbar sind und mit höheren Modulationsfrequenzen bis hin zu 1 Kz Schalt- und/oder Einstellzeiten um 1 ms möglich werden.

In bevorzugter Durchführungsart des erfindungsgemäßen Verfahrens werden als Erregerströme gepulste Gleichströme verwendet, die in der erläuterten Weise amplitudenmoduliert sind, wobei die Trägerfrequenz fᵢ der gepulsten Gleichströme mindestens zehnmal größer ist als die Modulationsfrequenz fₘ ihrer Amplitudenmodulation und vorzugsweise 50 bis 100 mal höher. Ein diesbezüglich als Stromquelle vorgesehener Stromimpuls-Generator ist in bevorzugter Gestaltung dahingehend ausgelegt, daß er auch die Strombegrenzung der durch die Erregerwicklungen fließenden - gepulsten - Gleichströme vermittelt, im Ergebnis also eine mit dem Verbraucher - der jeweiligen Erregerwicklung - in Reihe geschaltete Stromquelle darstellt, deren Innenwiderstand größer ist als der elektrische Widerstand der Verbraucher. Es können dann sehr niederohmige Erregerwicklungen verwendet werden, die kurze Anstiegs- und Abfallzeiten der die magnetischen Kräfte erzeugenden Ströme ermöglichen, wodurch wiederum die Ansprechzeiten eines solchermaßen gesteuerten Magnetventils erheblich verkürzt werden können. Gleichwohl können die ohmschen Verluste der Erregerwicklungen und damit die Wärmeentwicklung im Magnetsystem günstig niedrig gehalten werden.

Ausgehend von einem aus der AT-B 231 773 bekannten Magnetventil mit einem gehäusefest angeordneten kolbenförmigen Ventilelement und einem dieses umschließenden, hülsenförmigen, aus einem magnetisierbaren Material bestehenden, ringförmige Endstirnflächen aufweisenden, beweglichen Ventilelement, das den Anker eines Doppelhubmagnetsystems bildet, das zwei entlang einer gemeinsamen zentralen Achse angeordnete Erregerwicklungen sowie einen zylindermantelförmigen, aus magnetisierbarem Material bestehenden Magnetkörper umfaßt, der einen zwischen Gehäuseabschlußteilen sich erstreckenden, insgesamt zylindermantelförmigen Teil des Ventilgehäuses bildet, der die Erregerwicklungen mindestens außenseitig umschließt, wobei eine elektronische Schaltungsanordnung zur steuerbaren Erregung der Erregerwicklungen vorgesehen ist, durch die aus einer - federzentrierten - Grundstellung des beweglichen Ventilelements heraus in entgegengesetzter Richtung erfolgende Bewegungen desselben relativ zu dem feststehenden Ventilelement steuerbar sind und hierdurch alternativen Funktionsstellungen des Ventils zugeordnete Strömungspfade, die durch Steuerkanten markierende Ringnuten der Ventilelemente sowie in diese mündende Quer- und Längskanäle gebildet sind, entsprechend der Wege-Schalt-Funktion des Ventils alternativ freigebbar und absperrbar sowie hinsichtlich des wirksamen Durchflußquerschnitts einstellbar sind, wird die eingangs genannte Aufgabe hinsichtlich der Angabe eines zur Durchführung des erfindungsgemäßen Verfahrens geeigneten Ventils dadurch gelöst, daß der magnetisierbare Magnetkörper, abgesehen von radial inneren Ringspalten die Erregerwicklungen magnetisch leitend vollständig umgibt, daß die Gehäuse-abschlußteile, zwischen denen sich der Magnetkörper erstreckt und das kolbenförmige, gehäusefeste Ventilelement aus einem nicht magnetisierbaren Material bestehen, daß die ringförmigen Endstirnflächen des beweglichen Ventilelements, wenn dieses sich in seiner federzentrierten Grundstellung befindet, in symmetrischer Anordnung bezüglich der Quermittelebene des Magnetkörpers, der zu dieser Quermittelebene seinerseits symmetrisch ausgebildet ist, zwischen der jeweils inneren Begrenzung und der jeweils äußeren Begrenzung des jeweiligen Ringspaltes angeordnet sind, und daß zur Ansteuerung zweier elektronischer Schalter der elektronischen Schaltungsanordnung, über die die Erregerwicklungen alternierend an einen Stromausgang einer Erregerstromquelle anschließbar sind, ein Modulationsimpulsgenerator vorgesehen ist, der mit vorgebbarer Frequenz fₘ bzw. Periodendauer T = 1/fₘ Ansteuerimpulse mit vorgebbarer Impulsdauer T₁ und T₂ erzeugt, durch die die beiden elektronischen Schalter alternierend in ihren leitenden Zustand gelangen, wobei die Summe T₁ + T₂ der Impulsdauern gleich der Periodendauer T ist und die Modulationsfrequenz fₘ einen Wert von mindestens 100 Hz und vorzugsweise einen Wert zwischen 400 und 800 Hz hat.

Dieses Ventil ermöglicht eine sehr leichte Ausführung des beweglichen Ankers, der dadurch ein relativ kleines Trägheitsmoment hat, was für das Steuer-Ansprechverhalten des Magnetventils sehr günstig ist. Gleichwohl können die Ventilelemente dieses Ventils mit einer hinreichenden Baugröße realisiert werden, um bei einer grundsätzlichen Ausbildung des Ventils als Drei-Stellungsventil eine Vielzahl (n) von Wegen nach Anschluß und Durchflußquerschnitt steuern zu können, wobei eine Gestaltung des Magnetventils als 4/3-Wege-Ventil, die für eine Vielzahl von Anwendungsfällen benötigt wird, mit den durch die Merkmale des Anspruchs 12 angegebenen, konstruktiven Merkmalen herstellungstechnisch besonders einfach und raumsparend realisierbar ist.

Durch eine gemäß Anspruch 9 vorgesehene, aus nicht magnetisierbarem Material bestehende Hülse, die das Anker-Kolben-System des Magnetventils koaxial umgibt kann auf einfache Weise eine wirksame Abdichtung des Ölraumes des Magnetventils gegen dessen Magnetkörper und die von diesem größtenteils umschlossenen Erregerwicklungen erzielt werden, wobei diese Hülse mit den durch die Merkmale des Anspruchs 10 angegebenen Dimensions- und Anordnungsmerkmalen einerseits den magnetischen Fluß vom Magnetkörper des Magnetsystems zum Anker und von diesem wieder zum Magnetkörper hinreichend geringfügig stört und andererseits dadurch, daß sich zwischen der Hülse und dem Anker eine dünne Ölschicht ausbilden kann, die die Leichtgängigkeit des Ankers unterstützt.

Zur Federzentrierung des Ankers in der Grundstellung des Magnetventils vorgesehene Rückstellfedern können sehr viel schwächer ausgebildet werden als bei konventionellen Doppelhub-Magnetventile, zumal die Positionen maximaler Auslenkung des Ankers gleichsam durch "magnetische Anschläge" begrenzt sind, d.h. diejenigen Positionen, in der aufgrund der Magnetspaltformen auch bei maximalen Werten des Erregerstromes zwangsläufig eine Gleichgewichts-Endlage des Ankers gegeben ist.

Das erfindungsgemäße Magnetventil eignet sich insbesondere für solche Anwendungsfälle, bei denen es auf eine rasche Einstellung definierter Positionen und Durchflußquerschnitte der Durchflußpfade ankommt. In Kombination mit Positions-Istwert-Rückmeldeeinrichtungen eignet es sich wegen seines schnellen Ansprechverhaltens sehr gut als Positions-Sollwert-Steuerelement, insbesondere im Rahmen CNC-gesteuerter hydraulischer Antriebe, da es dank der präzisen Ansteuerbarkeit definierter Ankerpositionen auch für eine "digitale" Ansteuerung geeignet ist.

Weitere Einzelheiten und Merkmale der Erfindung ergeben sich aus der nachfolgenden Beschreibung eines erfindungsgemäßen Magnetventils anhand der Zeichnung sowie der Beschreibung der Art seiner Ansteuerung. Es zeigen:
- Fig. 1: Ein erfindungsgemäßes Magnetventil im Schnitt längs einer seine zentrale Längsachse enthaltenden Schnittebene, im Maßstab 2:1,
- Fig. 2: eine Ansicht des Magnetventils gemäß Fig. 1, teilweise im Schnitt längs der Ebene II-II der Fig. 1,
- Fig. 3: das Schaltsymbol des Magnetventils gemäß Fig. 1,
- Fig. 4: ein Blockschaltbild zur Erläuterung der Ansteuerung des Magnetsystems des Magnetventils gemäß den Fig. 1 bis 3,
- Fig. 5: ein Diagramm zur Erläuterung der Funktion dieses Magnetventils und
- Fig. 6: Einzelheiten eines möglichen Aufbaues des Modulationsimpuls-Generators 122 des Blockschaltbildes der Fig. 4.

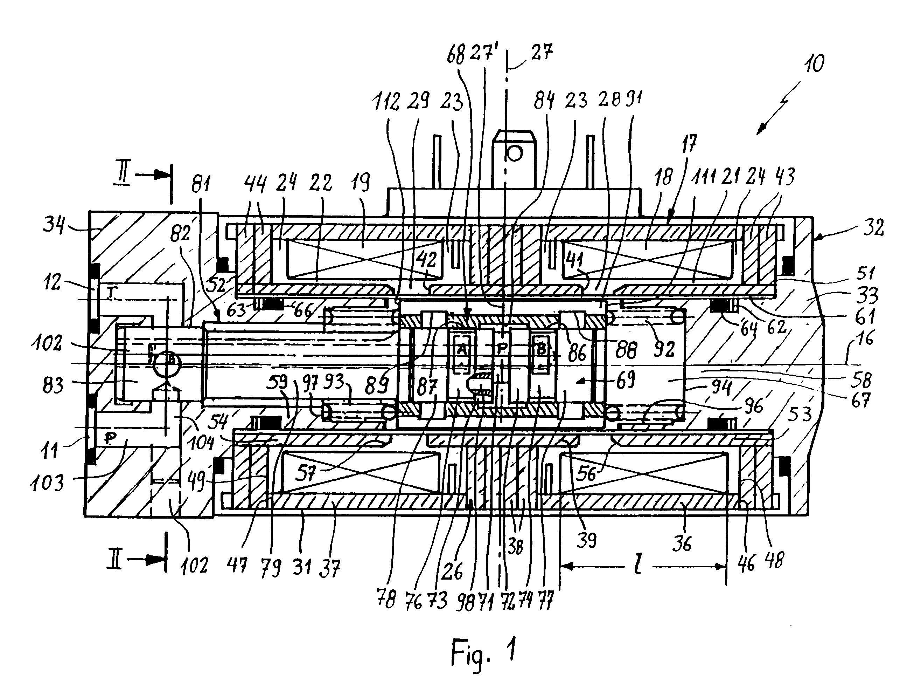

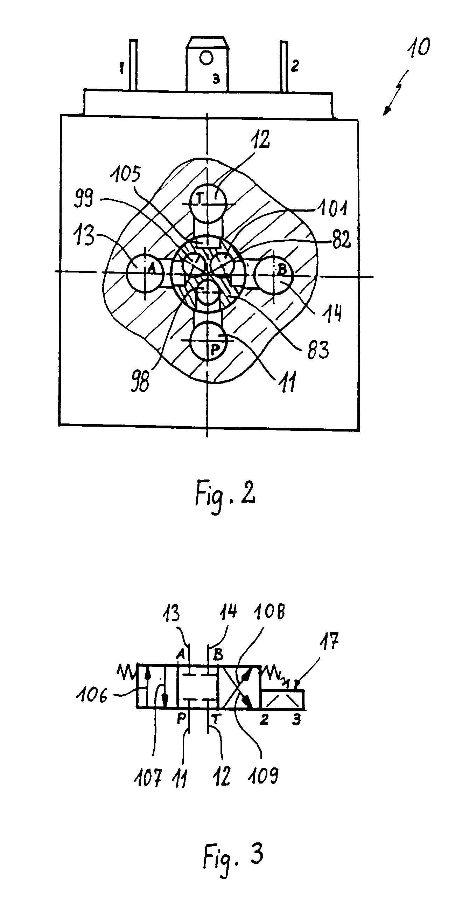

Das in den Fig. 1 und 2, auf deren Einzelheiten ausdrücklich verwiesen sei, dargestellte, insgesamt mit 10 bezeichnete erfindungsgemäße Magnetventil ist als 4/3-Wege-Ventil ausgebildet, das einen P-Druckversorgungsanschluß 11 hat, an den der Hochdruck-Ausgang eines - nicht dargestellten - Druckversorgungsaggregats anschließbar ist, einen T-Rücklaufanschluß 12, der im Betrieb an den drucklosen Vorratsbehälter des Druckversorgungsaggregats angeschlossen ist, sowie einen ersten, A-Steuerausgang 13 und einen zweiten B-Steuerausgang 14 an die beispielsweise die Antriebsdruckräume eines - nicht dargestellten - z.B. als doppelt-wirkender Hydrozylinder ausgebildeten Verbrauchers anschließbar sind.

Das Magnetventil 10 hat als Steuersystem ein bezüglich der zentralen Längsachse 16 des Ventils 10 rotationssymmetrisch ausgebildetes, insgesamt mit 17 bezeichnetes Doppelhub-Magnetsystem mit, entlang der zentralen Längsachse 16 gesehen, nebeneinander angeordneten Erregerwicklungen 18 und 19 gleicher Auslegung, durch deren alternative Erregung mit einem Steuerstrom das Magnetventil aus seiner dargestellten Grundstellung 0, in welcher seine Steuerausgänge 13 und 14 gegen den P-Versorgungsanschluß 11 und gegen den Rücklauf-anschluß 12 abgesperrt sind, alternativ in eine erregte Funktionsstellung I, in welcher der A-Steuerausgang 13 mit dem P-Versorgungsanschluß 11 und der B-Steueranschluß 14 mit dem T-Rücklaufanschluß 12 verbunden sind, oder in eine zweite erregte Stellung II steuerbar ist, in welcher der B-Steuerausgang 14 mit dem P-Versorgungsanschluß 11 und der A-Steuerausgang 13 mit dem T-Rücklaufanschluß 12 des Ventils 10 verbunden sind, wie dem Schaltsymbol der Fig. 3 entnehmbar.

Das Magnetventil 10 gelangt in seine Funktionsstellung I, wenn seine gemäß Fig. 1 rechte Erregerwicklung 18 bestromt und die andere Erregerwicklung 19 stromlos ist und in seine Funktionsstellung II, wenn die gemäß Fig. 1 linke Erregerwicklung 19 bestromt und die rechte Erregerwicklung 18 stromlos ist.

Die Erregerwicklungen 18 und 19 sind auf der Grundform nach Zylindermantel-förmige Spulenkörper 21 und 22 aufgewickelt, die aus isolierendem Kunststoffmaterial bestehen und radial nach außen weisende Endflansche 23 und 24 haben, die sich über die radiale "Dicke" der Erregerwicklungen 18 und 19 erstrecken. Die Erregerwicklungen 18 und 19 und ihre Spulenkörper 21 und 22 sind in einen insgesamt mit 26 bezeichneten, aus ferromagnetischen Material - Weicheisen - Magnetkörper eingebettet, der symmetrisch zu seiner rechtwinklig zur zentralen Längsachse 16 verlaufenden Quermittelebene 27 ausgebildet ist. Der Magnetkörper 26, der, abgesehen von zwei je einer der beiden Erregerwicklungen 18 bzw. 19 zugeordneten, radial inneren Ringspalten 28 und 29, die Erregerwicklungen 18 und 19 und deren Spulenkörper 21 und 22 - magnetisch leitend - vollständig umschließt, bildet, einschließlich einer äußeren, im wesentlichen Zylindermantelförmigen Umhüllung 31 aus Kunststoff einen insgesamt mantelförmigen Teil des insgesamt mit 32 bezeichneten Ventilgehäuses, das an seinen beiden Stirnseiten durch je ein massivblockförmig gestaltetes Abschlußteil 33 und 34 abgeschlossen ist, die aus einem nicht magnetischen Material, z.B. Aluminium bestehen.

Der Magnetkörper 26 umfaßt äußere Mantelrohre 36 und 37, welche sich, die Erregerwicklungen 18 und 19 unmittelbar einhüllend und an den äußeren in axialer Richtung nur geringfügig ausgedehnten zylindrischen Mantelflächen der radialen Flansche 23 und 24 der Spulenkörper 21 und 22 unmittelbar anliegend, jeweils über deren Gesamtlänge erstrecken, zentrale ringscheibenförmige Bleche 38, die den in axialer Richtung vorhandenen Zwischenraum zwischen den inneren radialen Flanschen 23 und den einander zugewandten inneren Ringstirnflächen der äußeren Mantelrohre 36 und 37 des Magnetkörpers 26 aushüllen und die - magnetisch leitende - Verbindung zwischen diesen äußeren Mantelrohren 36 und 37 und einem zentralen inneren Mantelrohr 39 vermitteln, das mit seinen ringförmigen Endstirnflächen 41 und 42 die jeweils inneren Begrenzungen der Ringspalte 28 und 29 bildet, äußere, ringscheibenförmige Jochbleche 43 und 44, welche in axialer Richtung gesehen, die Zwischenräume zwischen den kreisringförmigen Endstirnflächen 46 bzw. 47 der äußeren Mantelrohre 36 und 37 und den bündig an diese anschließenden Außenflächen 48 und 49 der äußeren Flansche 24 der Spulenkörper 21 und 22 sowie diesen in axialem Abstand gegenüberliegenden radialen Stufenflächen 51 und 52 der Gehäuse-Abschlußteile 33 bzw. 34 ausfüllen und die magnetisch leitende Verbindung zwischen den äußeren Mantelrohren 36 und 37 und je einem weiteren inneren Mantelrohr 53 bzw. 54 herstellen, die mit ihren äußeren kreisringförmigen Endstirnflächen ebenfalls an den radialen Stufen 51 bzw. 52 der Gehäuse-Abschlußteile 33 bzw. 34 anliegen und mit konisch gestalteten Phasenflächen 56 bzw. 57, die nach innen, d.h. zur zentralen Längsachse 16 des Magnetventils 10 hin geneigt verlaufen, die solchermaßen schneidenförmig gestalteten axial äußeren Begrenzungen der Ringspalte 28 und 29 bilden, durch die der magnetische Fluß innerhalb des Magnetkörpers 26 gleichsam unterbrochen ist.

Die beiden Gehäuse-Abschlußteile 33 und 34 haben aufeinander zu weisende, sich bis in die Nähe der äußeren Spaltbegrenzungen 56 und 57 erstreckende, jedoch noch in einem kleinen axialen Abstand von diesen endende, zapfenförmige Fortsätze, deren äußeren Mantelflächen von einem dünnwandigen Rohr 61 aus nicht magnetisierbarem Edelstahl umschlossen sind, das sich zwischen den radialen Stufenflächen 51 und 52 der Gehäuse-Abschlußteile 33 und 34 über die gesamte Ausdehnung des Magnetkörpers 26 erstreckt und mittels in äußere Ringnuten 62 und 63 der zapfenförmigen Fortsätze 58 bzw. 59 eingesetzter Ringdichtungen 64 und 66 gegen diese zapfenförmigen Fortsätze 58 und 59 abgedichtet ist, wodurch der den Magnet körper 26 und die Erregerwicklungen 18 und 19 aufnehmende, radial äußere Bereich des Ventilgehäuses 32 gegen dessen im Betrieb mit Hydrauliköl verfüllten Innenraum 67 des Ventilgehäuses 32, der auch den - drucklosen - Tankarm des Ventils 10 bildet, der ständig mit dem Vorratsbehälter des Druckversorgungsaggregats in kommunizierender Verbindung gehalten ist, abgedichtet ist. An seiner radial äußeren Seite ist das dünnwandige Metallrohr, das eine Wanddicke von 0,3 mm hat, unmittelbar von den inneren Mantelrohren 39 sowie 53 und 54 umschlossen.

Den - axial beweglichen - Anker des Doppelhub-Magnetsystems 17 bildet eine der Grundform nach kreiszylindrisch-rohrförmige, relativ dickwandige Hülse 68 aus magnetisierbarem Weicheisenmaterial, die auf Abschnitten ihrer Länge mit dichtendem Gleitsitz auf ringflanschförmigen Abschnitten eines insgesamt mit 69 bezeichneten, kolbenförmigen Ventilelements, das gehäusefest angeordnet ist, verschiebbar angeordnet ist, wobei die Hülse 68 den beweglichen Schieber des Magnetventils 10 bildet, der bei Beaufschlagung der "rechten" Erregerwicklung 18 des Magnetventils 10 mit einem Steuerstrom eine Verschiebung nach rechts erfährt, wodurch das Magnetventil 10 in seine Funktionsstellung I gelangt und bei - alternativer - Beaufschlagung der linken Erregerwicklung 19 ein Übergang des Magnetventils 10 in seine Funktionsstellung II vermittelt.

Das kolbenförmige Ventilelement 69 ist hinsichtlich der Anordnung einer mittleren Steuernut 71 - der P-Steuernut - diese seitlich begrenzender, flach-ringsflanschförmiger Rippen 72 und 73, durch diese, vom Zentrum des Magnetventils 10 aus gesehen je innenseitig begrenzter Steuernuten - der B-Steuernut 74 und der A-Steuernut 76 sowie diese jeweils außenseitig begrenzender, kolbenflanschförmiger Abschnitte 77 und 78 symmetrisch bezüglich der Quermittelebene 27 des Magnetkörpers 26 des Magnetventils 10 ausgebildet, wobei die Mantelflächen der ringflanschförmigen Rippen 72 und 73 und der kolbenflanschförmigen Abschnitte 77 und 78 des kolbenförmigen Ventilelements 69 die Gleitflächen für das bewegliche Ventilelement 68 - den Anker des Doppelhub-Magnetsystems 17 - bilden.

Das gehäusefeste, kolbenförmige Ventilelement 69 ist am freien Ende einer Kolbenstange 79 angeordnet, die in einer den zapfenförmigen Fortsatz 59 des gemäß Fig. 1 linken Gehäuse-Abschlußteils 34 durchsetzenden, innerhalb dieses Fortsatzes 59 gestuften im blockförmigen Bereich des Gehäuse-Abschlußteils 34 blind endenden, insgesamt mit 81 bezeichneten Sackbohrung fest eingesetzt ist, wobei der in der blind endenden Bohrungsstufe 82 dieser Sackbohrung 81 angeordnete Endabschnitt 83 der Kolbenstange 79 flüssigkeitsdicht in diese Sackbohrungs-Endstufe 82 eingepaßt ist, derart, daß in diese Bohrungsstufe 82 radial mündende Versorgungs- und Steuerkanäle nicht in kommunizierender Verbindung miteinander stehen.

Auch das axial hin- und herbewegliche, den Anker des Doppelhub-Magnetsystems 17 bildende, hülsenförmige Ventilelement 69 ist bei der zur Erläuterung des Magnetventils 10 gewählten Ausbildung desselben als 4/3-Wege-Ventil hinsichtlich der Anordnung einer zentralen Innennut 84 als P-Schaltnut, diese seitlich begrenzender, radial nach innen weisender, Flachringrippen 86 und 87 und durch diese jeweils innenseitig begrenzter und gegen die P-Schaltnut abgedichteter Innennuten 88 und 89 des beweglichen Ventilelements 68, die mit radial äußeren Längsnuten 91 desselben kommunizieren, welche ihrerseits in den Tankraum 67 des Ventils 10 münden, symmetrisch bezüglich seiner rechtwinklig zur zentralen Längsachse 16 des Magnetventils 10 verlaufenden Quermittelebene 27' ausgebildet.

Durch schwache und auch nur geringfügig vorgespannte, in entgegengesetzter Richtung Rückstellkräfte entfaltende Ventilfedern 92 und 93, deren eine - die Ventilfeder 92 - sich am Boden 94 einer in das gemäß Fig. 1 rechte Gehäuse-Abschlußteil 32 angebrachten Sackbohrung 96 abstützt und an der diesem zugewandten ringförmigen Endstirnfläche des beweglichen Ventilelements 68 angreift und deren andere - die Ventilfeder 93 axial an einer radialen Stufenfläche 97 abgestützt ist, durch die zwei Bohrungsstufen unterschiedlichen Durchmessers der Sackbohrung 81 des anderen Gehäuse-Abschlußteils 34 gegeneinander abgesetzt sind, und an der dieser radialen Stufenfläche 96 zugewandten ringförmigen Endstirnfläche des beweglichen Ventilelements 68 angreift, wird dieses, wenn keine der beiden Erregerwicklungen 18 und 19 mit einem Steuerstrom beaufschlagt ist, in seine neutrale Mittelstellung gedrängt, in welcher seine Quermittelebene 27' mit der Quermittelebene bzw. Symmetriebene 27 des Magnetkörpers 26 zusammenfällt und das Magnetventil 10 seine Grundstellung 0 einnimmt.

Die Kolbenstange 79 ist mit drei Längskanälen 98,99 und 101 versehen, die vom Ende der Kolbenstange 79 her als Bohrungen in diese eingebracht und durch Stopen 102 wieder druckdicht verschlossen worden sind. An den einen, gemäß Fig. 2 mittleren, unteren Querkanal 98 ist über eine kurze Längsbohrung 103 und eine Querbohrung 104, die radial in das linke Abschlußteil 34 eingebracht ist, wie gestrichelt angedeutet und ebenfalls mit einem Stopfen 83 nach außen dicht verschlossen ist. Der für die P-Zuführung ausgenutzte Längskanal 98 mündet innerhalb eines dem lichten Querschnitt nach kreissegmentförmig ausgefräste Bereiches des kolbenförmigen Ventilelements 69 in dessen P-Steuernut 71, die durch eine Verschiebung des beweglichen Ventilelements 68 durch Überlappen der zentralen Innennut 44 desselben alternativ mit der A-Steuernut 76 oder der B-Steuernut 74 des kolbenförmigen Ventilelements 69 bringbar ist.

Auf analoge Weise ist der Längskanal 99 der Kolbenstange 79 mit der A-Steuernut des kolbenförmigen Ventilelements 71, einerseits und andererseits mit dem A-Steuerausgang 13 des Magnetventils 10 sowie der dritte Längskanal 101 mit der B-Steuernut 74 des kolbenförmigen Ventilelements 71 sowie mit dem B-Steuerausgang 14 des Magnetventils 10 kommunizierend verbunden. Der mit dem Vorratsbehälter des Druckversorgungsaggregats verbundene T-Anschluß 12 mündet in eine sich über die gesamte Länge der Kolbenstange 79 und deren Endabschnitt 83 erstreckende, äußere Längsnut 106, über die der Innenraum 67 des Magnetventils 10 in ständig kommunizierender Verbindung mit dem Vorratsbehälter des Druckversorgungsaggregats gehalten ist. Über die in die äußere Längsnut 91 des beweglichen Ventilelements 68 mündenden Ringnuten 88 und 89 desselben können durch axiale Verschiebung des beweglichen Ventilelements 68 dessen B-Steuernut 74 und dessen A-Steuernut 76 alternativ mit dem Innenraum 67 des Magnetventils 10 und damit der B-Steueranschluß 14 und der A-Steueranschluß 13 - alternativ - zum Vorratsbehälter des Druckversorgungsaggregats hin entlastet werden.

Das Magnetventil 10 ist mit der angegebenen Gestaltung seines gehäusefesten Ventilelements 61 und seines beweglichen Ventilelements 68 als Proportionalventil ausgebildet, das mit zunehmender Auslenkung des beweglichen Ventilelements 68 aus seiner sperrenden Grundstellung 0 zunehmende Strömungsquerschnitte seiner in der Symboldarstellung der Fig. 3 mit 106 bis 109 bezeichnete Durchflußpfade freigibt, die in der Funktionsstellung I vom P-Versorgungsanschluß 11 zum A-Steuerausgang 13 sowie vom B-Steueranschluß 14 zum Rücklauf-Anschluß 12 bzw. in der Funktionsstellung II vom P-Versorgungsanschluß 11 zum B-Steuerausgang 14 und vom A-Steueranschluß 13 zum Rücklauf-Anschluß 12 führen.

Um eine möglichst reibungsarme Lagerung und leichtgängige Verschiebbarkeit des beweglichen Ventilelements 68 zu gewährleisten ist der Außendurchmesser der Hülse 68 geringfügig, d.h. um 0,1 mm bis 0,2 mm kleiner als der Innendurchmesser des dünnwandigen Rohres 61, so daß zwischen diesem und dem beweglichen Ventilelement 68 ein mit Hydrauliköl verfüllter Ringspalt verbleibt.

Die zwischen den kreisringförmigen Endstirnflächen 111 und 112 des beweglichen Ventilelements 68 gemessene Länge desselben ist so gewählt, daß in der dargestellten Grundstellung gesehen, die rechtwinklig zur zentralen Längsachse 16 des Ventils 10 verlaufenden Ebenen dieser Endstirnflächen 111 und 112 innerhalb der Spaltweiten der Ringspalte 28 und 29 angeordnet sind und von deren jeweils äußeren, schneidenförmigen Begrenzungen 56 und 57 in einem etwa dem maximalen Auslenkungshub des beweglichen Ventilelements 68 entsprechenden axialen Abstand angeordnet sind, der etwa 1 mm entspricht.

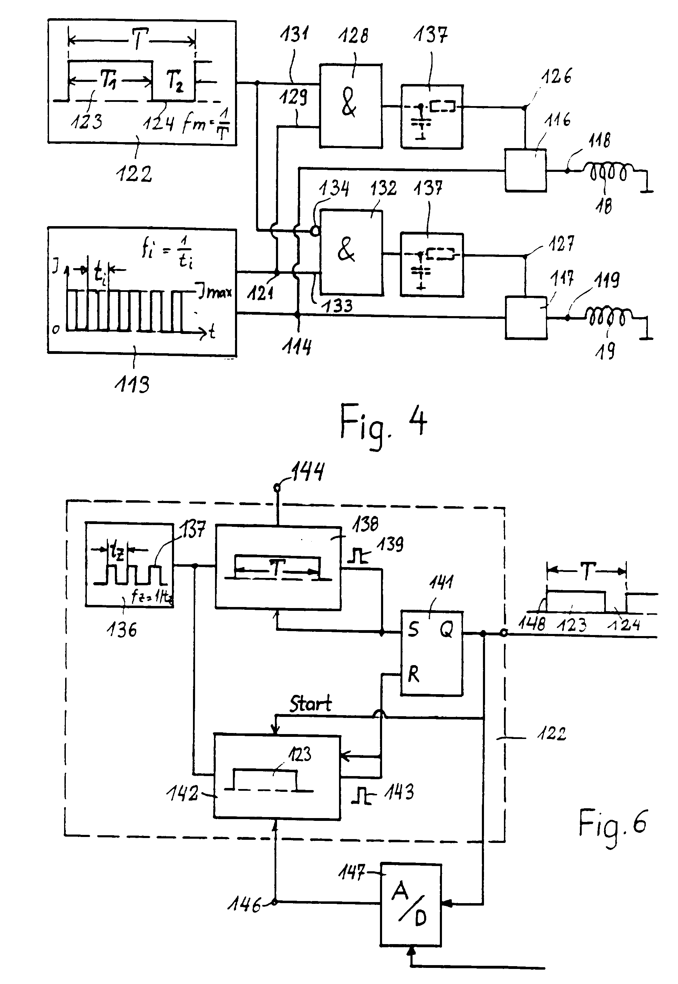

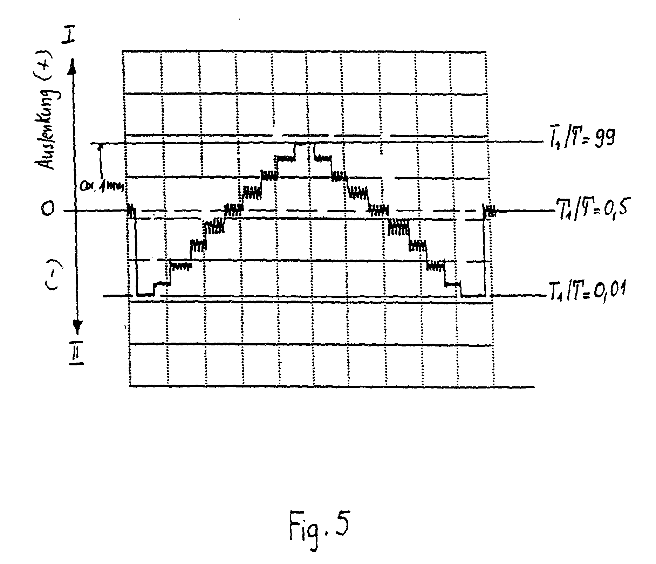

Zur Erläuterung der für das Magnetventil 10 vorgesehene Art der Steuerung der Bestromung seiner Erregerwicklungen 18 und 19, die eine möglichst genaue Einstellung definierter Auslenkungen des beweglichen Ventilelements 68 ermöglichen sollen, die dem Betrage nach zwischen maximaler Auslenkung und der Grundstellung 0 definiert veränderbar sein sollen, sei hier nunmehr auf das Blockschaltbild der Fig. 4 Bezug genommen:

Als Stromquelle 113 ist ein Generator vorgesehen, der einen gepulsten Gleichstrom als Ausgleichsstrom erzeugt, der zwischen der Stromstärke 0 und einem maximalen Betrag Iₘₐₓ impulsförmig variiert, wobei die Impulsfolgefrequenz f_{I} in eine typischen Auslegung 20 kHz beträgt. Der Maximalwert Iₘₐₓ dieses gepulsten Gleichstromes, wobei gängige Wert zwischen 5 A und 20 A betragen.

Die Stromquelle 114 ist über je einen elektronischen Schalter 116 bzw. 117 an den Stromversorgungsanschluß 118 der Erregerwicklung 18 bzw. den Versorgungsanschluß 119 der Erregerwicklung 19 anschließbar. An einem Steuerspannungsausgang 121 gibt der Stromgenerator 113 ein Steuerspannungs-Ausgangssignal ab, das synchron mit den Stromimpulsen zwischen hohem Signalpegel (Logische I) und niedrigem Signalpegel (Logische 0) variiert. Desweiteren ist ein Modulationsimpuls-Generator 122 vorgesehen, der mit der Frequenz fₘ eine periodische Folge von Hoch-Pegel-Spannungsimpulsen 123 (Logische I) und Niedrig-Pegel-Spannungsimpulsen 124 (Logische 0) erzeugt, aus deren logischer Verknüpfung mit den Steuerspannungsimpulsen des Stromgenerators 113 Ansteuersignale für die elektronischen Schalter 116 und 117 erzeugt werden, durch die diese alternierend in ihren leitenden und sperrenden Zustand gesteuert werden, wobei für diese elektronischen Schalter 116 und 117 vorausgesetzt ist, daß diese in ihren leitenden Zustand geschaltet werden, wenn an ihren Steuereingängen 126 bzw. 127 ein Hoch-Pegel-Signal als Steuersignal anliegt. Dem Steuereingang 126 des elektronischen Schalters 116, der in seinem leitenden Zustand den Stromausgang 114 des Stromgenerators 113 mit dem Versorgungsanschluß 118 der Erregerwicklung 18 verbindet, ist das Ausgangssignal eines UND-Gliedes 128 zugeleitet, das an einem ersten, nicht negierten Eingang 129 die Steuer-Ausgangssignale des Stromgenerators 113 und einem zweiten nicht negierten Eingang 131 die Ausgangsimpulse 123, 124 des Modulationsimpuls-Generators 122 empfängt.

Dem Steuereingang 127 des die Stromversorgung der zweiten Erregerwicklung 19 steuernden elektronischen Schalters 117 sind die Ausgangssignale eines weiteren UND-Gliedes 132 zugeleitet, das an einem nicht negierten, ersten Eingang 133 mit dem Steuerspannungs-Ausgangssignalen des Stromgenerators 113 und an einem negierten, zweiten Eingang 134 mit den Ausgangsimpulsen 123, 124 des Modulationsimpuls-Generators 122.

Die Impulsfolgefrequenz fₘ der Ausgangsimpulse 123, 124 des Modulationsimpuls-Generators 122 beträgt in typischer Auslegung bzw. Benutzung desselben 1/100 der Impulsfolgefrequenz fᵢ der Versorgungs-Stromimpulse des Stromimpuls-Generators.

Das Tastverhältnis, d.h. das Verhältnis t₁ der Dauer der Hoch-Pegel-Impulse 123 zu deren Impulsabstand T, der gleich der Summe T₁ + T₂ der Dauer T₁ der Hoch-Pegel-Impulse 123 und der Dauer T₂ der Niedrig-Pegel-Impulse 124 ist, ist zwischen 0,01 und 99 einstellbar.

Die Funktion der insoweit erläuterten Schaltungsanordnung ist die folgende:

Für die Dauer T₁ der Hoch-Pegel-Ausgangsimpulse 123 des Modulationsimpuls-Generators 122 ist das Ausgangssignal des Rundgliedes 128, über das der elektronische Schalter 116 angesteuert wird, über den die Stromversorgung der Erregerwicklung 18 gesteuert wird, bei deren Erregung das Magnetventil 10 seine Funktionsstellung I einnimmt, ein im Takt des relativ hochfrequent gepulsten Ausgangs-Gleichstromes des Stromimpuls-Generators 113 variierendes Signal, durch das dieser elektronische Schalter 116 synchron mit den Strom-Ausgangsimpulsen des Stromimpuls-Generators 113 in seinen leitenden Zustand gesteuert wird und mithin die Erregerwicklung 18 mit Erregerstrom beaufschlagt ist. Für diese Dauer T₁ der Bruch-Pegel-Ausgangsimpulse 123 des Modulationsimpuls-Generators 122 ist das andere UND-Glied 132 gesperrt, desgleichen der durch dieses angesteuerte elektronische Schalter 117 mit der Folge, daß in dieser Zeitspanne T₁ die andere Erregerwicklung 19 nicht erregt wird. Ist andererseits das Ausgangssignal des Modulationsimpuls-Generators 122 ein Niedrig-Pegel-Signal, so ist das erstgenannte UND-Glied 128 gesperrt und das über den negierten Eingang 134 angesteuerte UND-Glied 132 dazu aktiviert, für die Zeitspanne t₂ Steuer-Ausgangsimpulse an den elektronischen Schalter 117 abzugeben, wodurch dieser synchron mit den Strom-Ausgangsimpulsen des Stromimpuls-Generators 113 in seinen leitenden Zustand geschaltet und dadurch die Erregerwicklung 19 mit Erregerstrom beaufschlagt ist. Entsprechend den unterschiedlichen zeitlichen Effektivwerten der solchermaßen erzeugten Erregerströme ergeben sich für unterschiedliche Tastverhältnisse der Ausgangsimpulse des Modulationsimpuls-Generators 122 entsprechend verschiedene "Gleichgewichtsauslenkungen", in denen das bewegliche Ventilelement 68 noch mit der Modulationsfrequenz fₘ erfolgende oszillatorische Bewegungen ausführt, deren Amplituden umso größer sind, je näher das Tastverhältnis bei 0,5 liegt.

Zur Verdeutlichung dessen zeigt die Fig. 5 eine Wiedergabe eines Meßprotokolls, bei dem als Ordinate die Auslenkungshübe des beweglichen Ventilelements 68 aufgetragen sind, wobei zur Veränderung des Tastverhältnisses zwischen 0,01 und 99 der Ausgangsimpulse des Modulationsimpuls-Generators 122 die Impulsdauer T₁ indiskreten Schrittweiten von jeweils etwa 0,1 T verändert wurde und zur Überprüfung der Reproduzierbarkeit der vom beweglichen Ventilelement 68 eingenommenen Positionen diese Veränderung sowohl in ansteigendem als auch in absteigendem Sinne vorgenommen wurde. Bei maximalen Auslenkungshüben von 1 mm werden bei einem Druckabfall von 20 bar über dem Magnetventil bei einer der maßstäblichen Darstellung der Fig. 1 entsprechenden Gestaltung desselben Durchflußmengen um 14 l/min erzeugt, die in sehr gut linearer Relation zu den sehr präzise einstellbaren Auslenkungen des beweglichen Ventilelements 68 stehen.

Um sicherzustellen, daß die elektronischen Schalter 116 und 117, über die die Zuführung der Strom-Ausgangsimpulse des Stromimpuls-Generators 113 zu den Erregerwicklungen 18 und 10 erfolgt, für die Zeitdauern T₁ und T₂ in ihre Durchgangsstellung geschaltet sind, können den beiden UND-Gliedern 128 und 132 abfallverzögerte Zeitglieder 136 und 137 nachgeschaltet sein, die den Abfall der Ausgangssignale der beiden UND-Glieder 128 und 132 um etwa die Hälfte des Impulsabstandes t der Strom-Ausgangssignale des Stromimpuls-Generators 113 verzögern.

Derartige Verzögerung- oder Glättungsglieder 137 können als einfache RC-Integrationsglieder ausgebildet sein, wie in der Fig. 4 schematisch angedeutet.

Abschließend wird anhand der Fig. 6, auf deren Einzelheiten nunmehr verwiesen sei, der prinzipielle Aufbau eines im Rahmen der Schaltungsanordnung gemäß Fig. 4 geeigneten Modulationsimpuls-Generators 122 erläutert, bei dessen Verwendung zur Ansteuerung des erfindungsgemäßen Magnetventils 10 ein vielfältiger Einsatz desselben möglich ist.

Dieser Modulationsimpuls-Generator 122 umfaßt einen Taktgeber 136, der fortlaufend Zähl-Ausgangsimpulse 137 mit einer Impulsfolgefrequenz f_{z} erzeugt, die 100 bis 1.000 mal größer ist als die Frequenz fₘ, mit der die Modulations-Ausgangsimpulse des Modulationsimpuls-Generators 122 ausgegeben werden.

Diese Zähl-Ausgangsimpulse 137 sind einem addierenden, ersten Ringzähler 138 zugeleitet, der einen Ausgangsimpuls 139 immer dann erzeugt, wenn der Zählerstand dieses addierenden Ringzählers 138 einen Wert erreicht hat, der, multipliziert mit dem Impulsabstand t_{Z} der Zähl-Ausgangsimpulse des Taktgebers 136 dem Impulsabstand T entspricht, mit dem die Ausgangimpulse 123, 124 des Modulationsimpulsgebers 122 ausgegeben werden. Durch diesen Ausgangsimpuls 139 des addierenden Ringzählers 138 wird ein SR-Flip-Flop 141 auf hohen Ausgangssignalpegel gesetzt und gleichzeitig der addierende Ringzähler 138 auf den 0-Zählerstand zurückgesetzt. Desweiteren sind die Zähl-Ausgangsimpulse 137 einem zweiten, addierenden Ringzähler 142 zugeleitet, der einen Ausgangsimpuls 143 kurzer Dauer immer dann erzeugt, wenn sein Zählerstand einen Wert erreicht, der, multipliziert mit dem Impulsabstand t_{z} der Zähl-Ausgangsimpuls 137 des Taktgebers 136 der Dauer T₁ entspricht, mit der die Hoch-Pegel-Ausgangsimpulse 123 des Modulationsimpuls-Generators 122 abgegeben werden sollen. Dieser Ringzähler 142 wird durch seine Ausgangsimpulse 143 ebenfalls auf den Zählerstand 0 wieder zurückgesetzt.

Durch die Ausgangsimpulse 139 des die Periodendauer T der Modulations-Ausgangsimpulse des Modulationsimpuls-Generators 122 bestimmenden Ringzählers 138 wird das Flip-Flop 141 auf hohen Ausgangssignalpegel gesetzt. Durch die Ausgangsimpulse 143 des die Impulsdauer T₁ der Hoch-Pegel-Ausgangsimpulse 123 bestimmenden Ringzählers 138 wird dieses Flip-Flop 141 auf niedrigen Ausgangssignalpegel zurückgesetzt. Mit dem Einsetzen der Hoch-Pegel-Ausgangsimpulse 123 des Flip-Flops 141 wird jeweils der Ringzähler 142 gestartet, dessen Zählerstand die Dauer T₁ der Hoch-Pegel-Ausgangsimpulse 123 des Modulationsimpuls-Gebers 122 bestimmt. Die Periodendauer T der Modulations-Ausgangsimpulse 123, 124 des Modulationsimpuls-Gebers 122 kann über einen Eingabe-Eingang 144 des Modulationsimpuls-Gebers 122 dessen erstem addierendem Ringzähler 138 als Zähler-Endstand angegeben werden. Desgleichen kann die Impulsdauer T₁ der Hoch-Pegel-Ausgangsimpulse 123 des Modulationsimpuls-Gebers 122 über einen weiteren Eingabe-Eingang 146 dem zweiten addierenden Ringzähler 142 als Zähler-Endstandseingabe zugeleitet werden. Durch die diesbezügliche Eingabe ist das Tastverhältnis der Ausgangsimpulse des Modulationsimpulsgebers 122 veränderbar. Über diesen weiteren Eingang 146 kann das Ventil 10 sowohl durch die Ausgaben einer - nicht dargestellten - CNC-Steuereinheit angesteuert werden, oder auch "von Hand", z.B. durch Analogsignale, die über einen Analog/Digital-Wandler 147 als "Zahlenwert", der veränderbar ist, in den zweiten Ringzähler 142 eingegeben werden können, wobei diese Eingabe jeweils im Takt der Hoch-Pegel-Ausgangsimpulse 123 des Flip-Flops 141 gesteuert wird, zweckmäßigerweise mit der ansteigenden Flanke 148 dieser Impulse.

## Patentansprüche

1. Verfahren zur Einstellung definierter Durchflußquerschnitte in alternativen Funktionsstellungen eines als Magnetventil (10) ausgebildeten Schieberventils, dessen Steuermagnetsystem zwei Erregerwicklungen (18,19) umfaßt, durch deren alternative oder mit unterschiedlichen Steuerströmen erfolgende Bestromung ein zur Verschiebung eines Ventilkörpers (68) vorgesehener Anker eine zu der allein oder stärker bestromten Erregerwicklung hin gerichtete Verschiebung erfährt, wobei dieser Anker eine federzentrierte Grundstellung hat, die entweder einem definiertem Öffnungszustand des Ventils in einer seiner beiden alternativen Funktionsstellungen oder einer Zwischenstellung entspricht, z.B. einer dritten, die in nicht erregten Zustand des Magnetsystems zugeordneten Funktionsstellung, wobei zur Erregung der beiden Magnetwicklungen ausgenutzten Erregerströme einer Impulsmodulation unterworfen sind, durch die der Anker und mit diesem der bewegliche Ventilkörper ständig eine Hin- und Herbewegung ausführen, durch die die zwischen dem beweglichen Ventilkörper und dem gehäusefesten Element des Ventils vorhandene Reibung ständig auf dem relativ niedrigen Wert der Gleitreibung gehalten wird,
**dadurch gekennzeichnet**, daß die Erregerwicklungen (18 und 19) in fortlaufender, rascher alternierender Folge für unterschiedliche Zeitspannen T₁ und T₂ erregt werden, daß Richtung und Betrag der Auslenkung des beweglichen Ventilelements (68) durch die für eine ausgewählte Funktionsstellung des Magnetventils (10) ein definierter Strömungsquerschnitt bzw. -widerstand eingestellt werden soll durch das Verhältnis der Erregungszeiten T₁ und T₂ bestimmt werden, wobei der Grundstellung des beweglichen Ventilelements (68) das Verhältnis T₁/T₂=1 zugeordnet ist und daß die Summe T₁ und T₂ der Erregungszeitspanne, für die die Erregerwicklungen (18 und 19) bestromt werden, hinreichend klein gewählt ist, daß die Auslenkungsamplituden der in den effektiven Gleichgewichtslagen sich ergebenden Bewegungen des beweglichen Ventilelements (68) deutlich kleiner sind als der maximale Aussteuerhub desselben.

2. Verfahren nach Anspruch 1,
**dadurch gekennzeichnet**, daß die Summe der Ansteuerzeiten T₁ und T₂, für die die Erregerwicklungen (18 und 19) alternierend erregt werden, einem vorgebbaren konstanten Wert T entspricht und die alternative Erregung der beiden Erregerwicklungen mit der Modulations-Frequenz fₘ = 1/T erfolgt.

3. Verfahren nach Anspruch 1 oder Anspruch 2,
**dadurch gekennzeichnet**, daß das Verhältnis T₁/T₂ zwischen 1/100 und 100/1 veränderbar ist.

4. Verfahren nach einem der Ansprüche 1 bis 3,
**dadurch gekennzeichnet**, daß als Erregerströme für die beiden Erregerwicklungen gepulste Gleichströme verwendet werden, deren Impulsfolgefrequenz fᵢ mindestens 10 mal größer ist als die Modulationsfrequenz fₘ und vorzugsweise 50 bis 100 Mal höher.

5. Verfahren nach einem der Ansprüche 1 bis 4, **dadurch gekennzeichnet**, daß die Frequenz fₘ, mit der die Modulationsimpulse der unterschiedlichen Dauern T₁ und T₂ erzeugt werden, mindestens 100 Hz und vorzugsweise zwischen 400 Hz und 800 Hz.

6. Verfahren nach einem der Ansprüche 1 bis 5, **dadurch gekennzeichnet**, daß die Begrenzung der Erregerströme durch Vorgabe des Innenwiderstandes der Erregerstromquelle (113) erfolgt.

7. Magnetventil für die Anwendung des Verfahrens nach einem der Ansprüche 1 bis 6 mit einem gehäusefest angeordneten, kolbenförmigen Ventilelement (69) und einem dieses umschließenden, hülsenförmigen, aus einem magnetisierbaren Material bestehenden, ringförmige Endstirnflächen aufweisenden, beweglichen Ventilelement (68), das den Anker eines Doppelhub-magnetsystems (17) bildet, das zwei entlang einer gemeinsamen zentralen Achse (16) angeordnete Erregerwicklungen (18,19) sowie einen zylindermantelförmigen, aus einem magnetisierbaren Material bestehenden Magnetkörper (26) umfaßt, der einen zwischen Gehäuseabschlußteilen (33,34) sich erstreckenden, insgesamt zylindermantelförmigen Teil des Ventilgehäuses (32) bildet, der die Erregerwicklungen (18,19) mindestens außenseitig umschließt und mit einer elektronischen Schaltungsanordnung zur steuerbaren Erregung der Erregerwicklungen (18,19), wodurch aus einer federzentrierten Grundstellung des beweglichen Ventilelements (68) heraus in entgegengesetzter Richtung erfolgende Bewegungen desselben relativ zu dem feststehenden Ventilelement (69) steuerbar sind und hierdurch alternativen Funktionsstellungen des Ventils (10) zugeordnete Strömungspfade, die durch Steuerkanten markierende Ringnuten (71,74,76;84,86,89) der Ventilelemente sowie in diese mündende Quer- und Längskanäle (98,99,101) gebildet sind, entsprechend der Wege-Schaltfunktion des Ventils (10) alternativ freigebbar und absperrbar sowie hinsichtlich des wirksamen Durchflußquerschnitts einstellbar sind, **dadurch gekennzeichnet**, daß der - magnetisierbare - Magnetkörper (26), abgesehen von radial inneren Ringspalten (28,29), die Erregerwicklungen (18,19) magnetisch leitend vollständig umschließt, daß die Gehäuseabschlußteile (33,34), zwischen denen sich der Magnetkörper (26) erstreckt und das kolbenfeste, gehäusefeste Ventilelement (69) aus einem nicht magnetisierbaren Material bestehen, daß die ringförmigen Endstirnflächen (111,112) des beweglichen Ventilelements (68), wenn dieses sich in seiner federzentrierten Grundstellung befindet, in symmetrischer Anordnung bezüglich der Quermittelebene (27) des Magnetkörpers (26), der zu dieser Quermittelebene (27) symmetrisch ausgebildet ist, zwischen der jeweils inneren Begrenzung (41,42) und der jeweils äußeren Begrenzung (56,57) des jeweiligen Ringspaltes (28,29) angeordnet sind, und daß zur Ansteuerung zweier elektronischer Schalter (116,117) der elektronischen Schaltungsanordnung, über die die Erregerwicklungen (18, 19) alternierend an einen Stromausgang (114) einer Erregerstromquelle (113) anschließbar sind, ein Modulationsimpulsgenerator (122) vorgesehen ist, der mit vorgebbarer Frequenz (fₘ) bzw. Periodendauer T (T = 1/fₘ) Ansteuerimpulse mit vorgebbaren Impulsdauern T₁ und T₂ erzeugt, durch die die beiden elektronischen Schalter (116,117) alternierend in ihren leitenden Zustand gelangen, wobei die Summe T₁ + T₂ der Impulsdauern gleich der Periodendauer ist und die Modulationsfrequenz fₘ einen Wert von mindestens 100 Hz und vorzugsweise einen Wert zwischen 400 und 800 Hz hat.

8. Magnetventil nach Anspruch 7, **gekennzeichnet durch** seine Ausbildung als n/3-Wege-Ventil.

9. Magnetvenil nach Anspruch 7 oder Anspruch 8, **dadurch gekennzeichnet**, daß zwischen dem die Erregerwicklungen (18 und 19) bis auf Ringspalte (28 und 29) umhüllenden Magnetkörper (22) und dem hülsenförmigen Anker (68) eine dünnwandige ringzylindrische Hülse (61) aus nicht-magnetisierbarem Material, vorzugsweise Edelstahl, eingesetzt ist, welche die Abdichtung des von dem Magnetkörper (22) und den Erregerwicklungen (18 und 19) eingenommenen Raumes gegenüber dem Ölraum (67) des Magnetventils (10) vermittelt.

10. Magnetventil nach Anspruch 9, **dadurch gekennzeichnet**, daß die dünnwandige hülse (61) eine Wanddicke zwischen 0,2 und 0,4 mm, vorzugsweise von 0,3 mm hat, und daß zwischen dieser und der äußeren Mantelfläche des beweglichen
Ventilelements (68) ein Ringspalt vorhanden ist, der eine radiale Weite zwischen 0,05 und 0,2 mm, vorzugsweise von 0,1 mm hat.

11. Magnetventil nach einem der Ansprüche 7 bis 10,
**dadurch gekennzeichnet**, daß der Windungssinn der Erregerwicklungen (18 und 19) und die Richtung des Erregerstromes derart aufeinander abgestimmt sind, daß die beiden Erregerwicklungen (18 und 19) in dem zwischen innen angeordneten Bereich (38,39) des Magnetkörpers (22) dieselbe magnetische Polarisation erzeugen.

12. Magnetventil nach einem der Ansprüche 7 bis 11,
**gekennzeichnet durch** seine Ausbildung als 4/3-Wege-Magnetventil, wobei der P-Druckversorgungsanschluß (11) sowie die A- und 8-Steuerausgänge (13 und 14) über Längsbohrungen (98,99 und 101) des feststehenden Ventilkolbens (69) geführt sind, die in Ringnuten (71 bzw. 76 und 74) des Kolbens münden, durch deren in alternativen axialen Positionen des beweglichen Ventilelements (18) verschiedenen Überlappungen mit inneren Ringnuten desselben die Weg-Umschaltfunktion erzielt wird und daß der T-Rücklaufanschluß (12) über eine Außennut des kolbenförmigen Ventilelements (69) mit dem Tankarm (67) des Magnetventils (10) kommuniziert, der über eine äußere Längsnut (91) des beweglichen Ventilelements (68) mit inneren Ringnuten (88 und 89) desselben in kommunizierender Verbindung steht.

## Claims

1. Method of adjusting defined flow areas in alternative operating positions of a slide valve in the form of a solenoid valve (10), whose magnetic control system comprises two excitation windings (18, 19) which, when alternatively charged with current or charged with differing control currents, cause an armature provided for displacement of a valve body (68) to be displaced towards the only charged, or the more strongly charged excitation winding, said armature having a spring-centred basic position which corresponds either to a defined open state of the valve in one of its two alternative operating positions or to an intermediate position, e.g. a third operating position associated with the non-excited state of the magnetic system, the excitation currents used to excite the two excitation windings being subjected to a pulse modulation which causes the armature together with the movable valve body to execute a continuous reciprocating motion, by means of which the friction existing between the movable valve body and the housing-fixed element of the valve is constantly held at the relatively low value of the sliding friction,
characterized in that the excitation windings (18 and 19) are excited in continuous, rapid, alternating sequence for differing times T₁ and T₂, that the direction and amount of the deflection of the movable valve element (68), by means of which a defined flow area and flow resistance are to be adjusted for a selected operating position of the solenoid valve (10), are determined by the ratio of the excitation times T₁ and T₂, with the ratio T₁/T₂ = 1 being associated with the basic position of the movable valve element (68), and that the sum T₁ and T₂ of the excitation time during which the excitation windings (18 and 19) are energized is selected low enough for the deflection amplitudes of the movements of the movable valve element (68) occurring in the effective equilibrium positions to be much smaller than the maximum control stroke of said movable valve element.

2. Method according to claim 1,
characterized in that the sum of the control times T₁ and T₂, during which the excitation windings (18 and 19) are alternately excited, corresponds to a preselectable constant value T and the alternative excitation of the two excitation windings is effected at the modulation frequency fₘ = 1/T.

3. Method according to claim 1 or claim 2,
characterized in that the ratio T₁/T₂ is variable between 1/100 and 100/1.

4. Method according to one of claims 1 to 3,
characterized in that, as excitation currents for the two excitation windings, pulsed direct currents are used, the pulse repetition frequency fᵢ of which is at least 10 times greater than the modulation frequency fₘ, and preferably 50 to 100 times higher.

5. Method according to one of claims 1 to 4, **characterized in that** the frequency fₘ, at which the modulation pulses of the different durations T₁ and T₂ are generated, is at least 100 Hz and preferably between 400 Hz and 800 Hz.

6. Method according to one of claims 1 to 5, **characterized in that** limiting of the excitation currents is effected by preselecting the internal resistance of the excitation current source (113).

7. Solenoid valve for effecting the method according to one of claims 1 to 6, having a housing-fixed, piston-shaped valve element (69) surrounded by a sleeve-like, movable valve element (68) made of a magnetizable material, which has annular end faces and forms the armature of a double-stroke magnetic system (17), which comprises two excitation windings (18, 19) disposed along a common central axis (16) as well as a cylinder-envelope-shaped magnet body (26) made of a magnetizable material, which forms an, on the whole, cylinder-envelope-shaped part of the valve housing (32), which extends between housing closure parts (33, 34) and at least externally encloses the excitation windings (18, 19), and having an electronic circuit arrangement for controllable excitation of the excitation windings (18, 19), by means of which movements relative to the fixed valve element (69) effected in the opposite direction by the movable valve element (68) out of its spring-centred basic position are controllable and as a result flow paths, which are associated with alternative operating positions of the valve (10) and are formed by annular grooves (71, 74, 76; 84, 86, 89) of the valve elements, which mark control edges, and by transverse and longitudinal channels (98, 99, 101) which open into said annular grooves, are alternatively openable and closable and are adjustable in terms of their effective flow area in accordance with the directional switching function of the valve (10), **characterized in that** the - magnetizable - magnet body (26), apart from radially inner annular gaps (28, 29), completely surrounds the excitation windings (18, 19) in a permeable manner, that the housing closure parts (33, 34), between which the magnet body (26) extends, and the piston-fixed, housing-fixed valve element (69) are made of a non-magnetizable material, that the annular end faces (111, 112) of the movable valve element (68), when the latter is in its spring-centred basic position, are disposed in a symmetrical arrangement in relation to the transverse centre plane (27) of the magnet body (26), which is formed symmetrically relative to said transverse centre plane (27), between the respective inner delimitation (41, 42) and the respective outer delimitation (56, 57) of the respective annular gap (28, 29), and that for activating two electronic switches (116, 117) of the electronic circuit arrangement, by means of which the excitation windings (18, 19) are alternately connectable to a current output (114) of an excitation current source (113), a modulation pulse generator (122) is provided, which at a preselectable frequency (fₘ) and for a preselectable period T (T = 1/fₘ) generates control pulses of preselectable durations T₁ and T₂, by means of which the two electronic switches (116, 117) are moved alternately into their conducting state, the sum T₁ + T₂ of the pulse durations being equal to the period and the modulation frequency fₘ having a value of at least 100 Hz and preferably a value of between 400 and 800 Hz.

8. Solenoid valve according to claim 7, **characterized by** its construction as an n/3-way valve.

9. Solenoid valve according to claim 7 or claim 8, **characterized in that** inserted between the magnet body (22), which encloses the excitation windings (18 and 19) apart from annular gaps (28 and 29), and the sleeve-like armature (68) is a thin-walled, circular-cylindrical sleeve (61) made of non-magnetizable material, preferably stainless steel, by means of which the space occupied by the magnet body (22) and the excitation windings (18 and 19) is sealed off from the oil chamber (67) of the solenoid valve (10).

10. Solenoid valve according to claim 9, **characterized in that** the thin-walled sleeve (61) has a wall thickness of between 0.2 and 0.4 mm, preferably of 0.3 mm, and that between said sleeve and the outer lateral surface of the movable valve element (68) there is an annular gap which has a radial width of between 0.05 and 0.2 mm, preferably of 0.1 mm.

11. Solenoid valve according to one of claims 7 to 10, characterized in that the winding direction of the excitation windings (18 and 19) and the direction of the excitation current are tuned to one another in such a way that the two excitation windings (18 and 19) generate the same magnetic polarization in the region (38, 39) of the magnet body (22) disposed between said windings.

12. Solenoid valve according to one of claims 7 to 11, characterized by its construction as a 4/3-way solenoid valve, the P-pressure supply connection (11) as well as the A- and B-control outputs (13 and 14) being conveyed through longitudinal bores (98, 99 and 101) of the fixed valve piston (69) which open into annular grooves (71, 76 and 74 respectively) of the piston, which overlap internal annular grooves of the movable valve element (18) to a differing extent in alternative axial positions of said valve element to achieve the directional changeover function, and that the T-return connection (12) communicates by way of an external groove of the piston-shaped valve element (69) with the tank arm (67) of the solenoid valve (10) which is connected in a communicating manner by an external longitudinal groove (91) of the movable valve element (68) to internal annular grooves (88 and 89) of said valve element.

## Revendications

1. Procédé pour le réglage de sections de débit bien déterminées dans des positions de fonctionnement alternatives d'un distributeur, ou vanne, à tiroir réalisé en tant que distributeur électromagnétique (10) dont le système de commande électromagnétique comprend deux enroulements d'excitation (18, 19) qui, du fait d'être alimentés en courant alternativement ou avec des courants de commande différents, font qu'une armature prévue pour le coulissement d'un élément de distributeur (68) subit un coulissement en direction du seul enroulement d'excitation alimenté en courant ou de celui des enroulements d'excitation alimenté en courant plus fort, cette armature présentant une position de base, centrée par ressort, qui correspond soit à un état d'ouverture bien défini du distributeur dans l'une de ses deux positions de fonctionnement alternatives, soit à une position intermédiaire, par exemple une troisième position de fonctionnement associée à l'état non excité du système électromagnétique, et les courants excitateurs utilisés pour exciter les deux enroulements électromagnétiques étant soumis à une modulation par impulsions grâce à laquelle l'armature et, avec celle-ci, l'élément de distributeur mobile effectuent constamment un mouvement de va-et-vient par lequel le frottement se produisant entre l'élément de distributeur mobile et l'élément de distributeur relié de manière fixe à au corps de ce dernier est maintenu constamment à la valeur relativement basse du frottement de glissement, caractérisé en ce que les enroulements d'excitation (18 et 19) sont excités en alternance rapide et continuelle durant des laps de temps différents T₁ et T₂, en ce que le sens et la quantité de la déviation de l'élément de distributeur mobile (68) par lequel doit être réglée, pour une position de fonctionnement choisie du distributeur électromagnétique (10), une section d'écoulement ou une résistance à l'écoulement bien définies, sont déterminés par le rapport des durées d'excitation T₁ et T₂, le rapport T₁/T₂ = 1 étant associé à la position de base de l'élément de distributeur mobile (68), et en ce que la somme T₁ + T₂ de la durée d'excitation pendant laquelle les enroulements d'excitation (18 et 19) sont alimentés en courant est choisie suffisamment petite pour que les amplitudes de déviation des mouvements de l'élément de distributeur mobile (68), qui se produisent dans les positions d'équilibre effectives, soient nettement plus réduites que la course maximale réglable de ce dernier.

2. Procédé selon la revendication 1, caractérisé en ce que la somme des durées de commande T₁ et T₂ pendant lesquelles les enroulements d'excitation (18 et 19) sont alternativement excités correspond à une valeur constante T pouvant être préétablie et l'excitation alternée des deux enroulements d'excitation s'effectue avec la fréquence de modulation fₘ = 1/T.

3. Procédé selon la revendication 1 ou 2, caractérisé en ce que le rapport T₁/T₂ peut varier entre 1/100 et 100/1.

4. Procédé selon l'une quelconque des revendications précédentes, caractérisé en ce qu'il est utilisé, en tant que courants excitateurs pour les deux enroulements d'excitation, des courants continus pulsés dont la fréquence de répétition d'impulsions fᵢ est au moins 10 fois plus élevée que la fréquence de modulation fₘ et de préférence 50 à 100 fois plus élevée.

5. Procédé selon l'une quelconque des revendications précédentes, caractérisé en ce que la fréquence fₘ avec laquelle les impulsions de modulation des durées différentes T₁ et T₂ sont produites est au moins égale à 100 Hz et est de préférence comprise entre 400 et 800 Hz.

6. Procédé selon l'une quelconque des revendications précédentes, caractérisé en ce que la limitation des courants excitateurs se réalise par fixation préalable de la résistance interne de la source de courant excitateur (113).

7. Distributeur électromagnétique, pour la mise en oeuvre du procédé selon l'une quelconque des revendications précédentes, équipé d'un élément de distributeur en forme de piston (69) monté de façon à être relié de manière fixe au corps du distributeur et d'un élément de distributeur mobile en forme de douille (68) qui, enfermant l'élément de distributeur (69) et réalisé en une matière magnétisable, présente des faces frontales terminales annulaires et constitue l'armature d'un système électromagnétique à double course (17), lequel comprend deux enroulements d'excitation (18, 19) montés le long d'un axe central commun (16) ainsi qu'un corps magnétique (26) en forme de paroi cylindrique qui, réalisé en une matière magnétisable, forme une partie, au total en forme de paroi cylindrique, du corps de distributeur (32), laquelle partie s'étend entre des parties terminales (33, 34) du corps de distributeur et enferme les enroulements d'excitation (18, 19) au moins extérieurement, et d'un montage électronique pour l'excitation réglable des enroulements d'excitation (18, 19), de sorte qu'à partir d'une position de base, centrée par ressort, de l'élément de distributeur mobile (68), des mouvements de ce dernier se produisant en sens opposé, par rapport à l'élément de distributeur fixe (69), peuvent être commandés et ainsi des trajets d'écoulement associés à des positions de fonctionnement alternatives du distributeur (10) et qui sont formés par des rainures annulaires (71, 74, 76 ; 84, 86, 89), marquant des arêtes distributrices, des éléments de distributeur ainsi que par des canaux transversaux et longitudinaux (98, 99, 101) débouchant dans lesdites rainures annulaires peuvent, selon la fonction de commande de voies du distributeur (10), être alternativement libérés et bloqués ainsi qu'être réglés en ce qui concerne la section de débit effective, caractérisé en ce que le corps magnétique magnétisable (26), exception faite de fentes annulaires radialement intérieures (28, 29), entoure les enroulements d'excitation (18, 19) complètement en tant que conducteur magnétique, en ce que les parties terminales (33, 34) du corps de distributeur, entre lesquelles le corps magnétique (26) s'étend, et l'élément de distributeur en forme de piston (69) relié de manière fixe au corps de distributeur se composent d'une matière non magnétisable, en ce que les faces frontales terminales annulaires (111, 112) de l'élément de distributeur mobile (68) sont disposées, lorsque ce dernier se trouve dans sa position de base centrée par ressort, symétriquement par rapport au plan médian transversal (27) du corps magnétique (26), lequel est réalisé pour sa part symétriquement par rapport à ce plan médian transversal (27), entre la limite intérieure respective (41, 42) et la limite extérieure respective (56, 57) de la fente annulaire concernée (28, 29) et en ce que pour commander les deux interrupteurs électroniques (116, 117) du montage électronique par l'intermédiaire desquels les enroulements d'excitation (18, 19) peuvent être connectés alternativement à une sortie de courant (114) d'une source de courant excitateur (113), il est prévu un générateur d'impulsions de modulation (122) qui produit avec une fréquence pouvant être préétablie (fₘ) et une durée de période T (T = 1/fₘ) des impulsions de commande avec des durées d'impulsion préétablies T₁ et T₂ grâce auxquelles les deux interrupteurs électroniques (116, 117) passent alternativement à leur état conducteur, la somme T₁ + T₂ des durées d'impulsion étant égale à la durée de période T et la fréquence de modulation fₘ présentant une valeur d'au moins 100 Hz et de préférence une valeur comprise entre 400 et 800 Hz.

8. Distributeur électromagnétique selon la revendication 7, caractérisé en ce qu'il est réalisé sous la forme d'un distributeur à n/3 voies.

9. Distributeur électromagnétique selon la revendication 7 ou 8, caractérisé en ce qu'entre le corps magnétique (22) enveloppant les enroulements d'excitation (18 et 19), exception faite des fentes annulaires (28 et 29), et l'armature en forme de douille (68) est inséré un tube cylindrique circulaire à paroi mince (61) en une matière non magnétisable, de préférence de l'acier spécial, lequel tube assure l'étanchéification de l'espace, occupé par le corps magnétique (22) et les enroulements d'excitation (18 et 19), par rapport à l'espace à huile (67) du distributeur électromagnétique (10).

10. Distributeur magnétique selon la revendication 9, caractérisé en ce que le tube à paroi mince (61) présente une épaisseur de paroi comprise entre 0,2 et 0,4 mm, de préférence de 0,3 mm, et en ce qu'entre ce tube et la surface périphérique extérieure de l'élément de distributeur mobile (68) se trouve une fente annulaire qui présente une largeur radiale comprise entre 0,05 et 0,2 mm, de préférence de 0,1 mm.

11. Distributeur électromagnétique selon l'une quelconque des revendications 7 à 10, caractérisé en ce que le sens d'enroulement des enroulements d'excitation (18 et 19) et la direction du courant excitateur sont adaptés de telle manière l'un à l'autre que les deux enroulements d'excitation (18 et 19) produisent, dans la région (38, 39) du corps magnétique (22) disposée entre ces derniers, la même polarisation magnétique.

12. Distributeur électromagnétique selon l'une quelconque des revendications 7 à 11, caractérisé par sa réalisation sous la forme d'un distributeur électromagnétique à 4/3 voies, le raccord d'alimentation en pression P (11) ainsi que les sorties de commande A et B (13 et 14) étant guidés par l'intermédiaire d'alésages longitudinaux (98, 99 et 101) du piston de distributeur fixe (69) qui débouchent dans des rainures annulaires (71 ; 76 et 74) du piston, lesquelles, du fait qu'elles se superposent, dans des positions axiales alternatives de l'élément de distributeur mobile (18), diversement à des rainures annulaires intérieures de ce dernier, permettent d'obtenir la fonction de changement de voie et en ce que le raccord de retour en T (12) communique, par l'intermédiaire d'une rainure extérieure de l'élément de distributeur en forme de piston (69), avec l'espace formant réservoir (67) du distributeur électromagnétique (10) qui est en communication, par l'intermédiaire d'une rainure longitudinale extérieure (91) de l'élément de distributeur mobile (68), avec des rainures annulaires intérieures (88 et 89) de ce dernier.
